# EUROPÄISCHE PATENTANMELDUNG

(11) **EP 1 508 867 A2**
(43) Veröffentlichungstag der Anmeldung: **23.02.2005**
(21) Anmeldenummer: 04019129.8
(22) Anmeldetag: 12.08.2004
(51) Int. Cl.: G06F 17/60

(54) **Verfahren zum Erzeugen mindestens eines Projekt-Referenzmodells, Verfahren zur Generierung einer strukturierten Konfigurationsinformation mittels eines solchen Projekt-Referenzmodells sowie Vorrichtung zur Durchführung, Verwaltung und Organisation solcher Verfahren**

(30) Priorität: 22.08.2003 DE 10339112
(71) Anmelder: Dilger, Peter, 8565 Hugelshofen (CH)
(72) Erfinder: Dilger, Peter, 8565 Hugelshofen (CH)
(74) Vertreter: Patentanwälte Westphal, Mussgnug & Partner

(57) **Zusammenfassung**

Die Erfindung betrifft ein Verfahren zum Erzeugen mindestens eines Projekt-Referenzmodells, Verfahren zur Generierung einer strukturierten Konfigurationsinformation mittels eines solchen Projekt-Referenzmodells sowie Vorrichtung zur Durchführung, Verwaltung und Organisation solcher Verfahren. Hierbei sind folgende Verfahrensschritte wesentlich:
- Bereitstellen eines vorgegebenen Projekt-Referenzmodells in einer Speicheranordnung mit mindestens einem Klassifikationsschema, das verschiedene Klassifikationselemente enthält, wobei jedes Klassifikationselement auf mindestens einen Speicherort verweist, in dem Informationen für dieses Klassifikationselement gespeichert sind;
- Darstellung des vorgegebenen Projekt-Referenzmodells auf einer Anzeigeeinrichtung;
- Generierung eines neuen Projekt-Referenzmodells aus dem vorgegebenen Projekt-Referenzmodell über eine Eingabevorrichtung nach Maßgabe von vorgegebenen organisationsund/oder leistungsspezifischen Bedingungen;
- Darstellung des neuen Projekt-Referenzmodells auf der Anzeigeeinrichtung; und
- Speichern des neuen Referenzkonfigurationsmodells.

## Beschreibung

Die Erfindung betrifft Verfahren zum Erzeugen mindestens eines Projekt-Referenzmodells, Verfahren zur Generierung einer strukturierten Konfigurationsinformation mittels eines solchen Projekt-Referenzmodells sowie Vorrichtungen zur Durchführung, Verwaltung und Organisation solcher Verfahren.

### Technischer Hintergrund

In grossen Unternehmungen und Organisationen gibt es eine Vielzahl von Projekten, die häufig ähnliche Strukturen und Merkmale aufweisen und parallel und vielfach unabhängig voneinander bearbeitet werden. Für die Planung, Durchführung und Nachhaltung von Projekten gibt es zwar Hilfestellungen in Form von allgemeinen oder zertifizierten Vorgehensmodellen, Beschreibungen und Vorschriften und auch in beschränktem Umfang systemische Lösungen. Diese Systeme und Lösungen unterstützen die Projekte jedoch nur in geringem Umfang und wenn überhaupt nur in ihrer inhaltlichen Durchführung und dies auch nur sehr eingeschränkt.

Gründe für die mangelnde systemische Unterstützung sind vor allem komplexe Strukturen, Abläufe und Zusammenhänge, welche sich ohne Referenzmodelle oder Projekt-Referenzmodelle nicht standardisieren und normieren lassen.

Einzelne Projekte lassen sich selbst ohne die Verwendung von solchen Projekt-Referenzmodellen in ihren detaillierten Prozessen, Ausprägungen und Abläufen nur unzureichend unter dem Aspekt der Wiederverwendung und Standardisierung planen, durchführen und nachhalten. Bisher bekannte Projekt-Management- und Projekt-Organisations-Anwendungen bzw. Projektportale unterstützen zwar die systemische Vorhaltung von Projektstrukturen mit Inhalten, Rollen, Berichtswesen und sowie verbundene Anwendungen. Die Erzeugung neuer Projektvorgänge- und -abläufe obliegt jedoch den Anwendern und den Betreibern, welche diese selbst manuell und damit sehr individuell erzeugen bzw. bereitstellen müssen. Als Folge werden die Projekte immer wieder aufs Neue erfunden, weil - wenn überhaupt - nur unzureichend auf Vorbekanntes zurückgegriffen wird.

Grosse Organisationen streben fortlaufend nach einer Verbesserung der inhaltlichen Unterstützung ihrer Projektprozesse. Jedoch hängt eine derartige Verbesserung von dem Ausmaß des Verständnisses um erfolgreiche Projektvorgänge- und -abläufe ab, einschließlich möglicher alternativer Vorgänge und Abläufe und ihrer Verhältnisse untereinander. Gerade in großen Organisationen werden oft hunderte oder gar tausende von Projekten parallel durchgeführt. Häufig erhalten sie keine oder nur eine geringe systematische, theoretische und empirische Unterstützung auch in wiederverwendbaren und gewonnen Erkenntnissen nach dem Prinzip "Best Practice". Bei diesem Prinzip werden diejenigen Bestandteile aus einem einzelnen, bearbeiteten und abgeschlossenen Projekt übernommen, die sich als gut bewährt haben. Nicht bewährte Projektteile und/oder -abschnitte werden dagegen manuell abgeändert oder manuell ganz neu gestaltet. Die Abänderung solcher Projekte muss individuell erfolgen und ist damit aufwändig. Die Folge ist, dass die systemische Unterstützung zur Förderung des Verständnisses um diese Vorgänge und Abläufe und die Entwicklung verbesserter Vorgänge und Abläufe dadurch stark behindert wird. Die Entwicklung systematischer, standardisierter und wiederverwendbarer Möglichkeiten in Form und in der Nutzung von Projektreferenzmodellen bietet somit großen Organisationen eine große Chance und die Möglichkeit neue bzw. bewährte Modelle, Verfahren und Lösungen in der täglichen Projektarbeit systematisiert bereit zustellen.

Die daraus in der Folge nicht erkannten Automatisierungs- und Verbesserungsmöglichkeiten bei der Erstellung, Nutzung und Weiterentwicklung von Projektstandards führen dazu, dass die Entwicklungen und Investitionen fehlgeleitet werden und sich immer noch mit der Bereitstellung von elektronischen Richtlinien, Anweisungen und anderen Hilfsmitteln beschäftigen. Deren sachgemässe Anwendung obliegt jedoch den Nutzern und erfordert viel Verständnis, großes Engagement und umfangreiche Ausbildung. Den grossen Aufwendungen steht häufig nur ein sehr geringer Nutzen gegenüber. So ist es unter anderem zu erklären, dass alleine in Deutschland in jedem Jahr ein Schaden von mehreren Milliarden Euro in der Industrie und in den Organisationen durch terminlich, wirtschaftlich und inhaltlich nicht erreichte Projektziele entsteht.

Durch Standardisierung und Automatisierung ließen sich jedoch Planungs- und Abwicklungssicherheit nennenswert verbessern.

Die bestehende Problematik wird noch deutlicher, wenn die derzeitige Situation am Beispiel der Fahrzeugentwicklung beleuchtet wird.

In Projekten von besonderer Grösse und Priorität organisiert sich die Industrie heute damit, dass sie eine Detaillierung der Prozesse und Strukturen des Grossprojektes vornimmt und sogenannte Liefer- bzw. Qualitäts-Gates bzw. andere Meldepunkte für die Sicherstellungstermine hierzu festlegen. Damit soll der Überblick über die meist komplexe Gesamtstruktur erhalten bleiben und der Projektfortschritt, z.B. bei einer Fahrzeugentwicklung kontrollierbar und zu managen sein. Die für diese Prozesse und Meldepunkte aus der Struktur oder dem Verlauf des gesamten Vorhabens bereitzustellenden Sicherstellungsinformationen müssen durch die jeweiligen Verantwortlichen gegeben werden. Dieser bei der Fahrzeugentwicklung definierte Produktentwicklungsprozess (PEP) ist in der Regel standardisiert und zertifiziert und dient dem Management zur Koordination vieler Einzelprozesse und damit zur Koordination von verbundenen Einzelprojekten.

Gerade für die große Vielzahl der den Gates zuliefernden Projekte, die besonderer Spezialisierung bedürfen, werden bisher weder Automatismen, noch geeignete Standardisierungsmechanismen in Form geeigneter Projektorganisations- und Projektabwicklungs-Anwendungen bereitgestellt. Die für die Durchführung bzw. Umsetzung beauftragten Verantwortlichen werden sich selbst überlassen. Es wird keine durchgängige systemische Unterstützung gewährt, da die komplexen, spezifischen und detaillierten Projektstrukturen mit Teilprojekten oder Arbeitspaketen verknüpft mit geeigneten Anwendungen, Verfahren, Modellen, Informationen, Dokumenten und Daten, in der heutigen Praxis nicht beherrscht und somit häufig individuell neu organisiert und strukturier werden. Automatisierte Abgleichungen mit übergeordneten und parallel ablaufenden Prozessen und Projekten sind heutzutage nicht möglich. Mögliche Standardisierungen von Projektportfolios, Projektarten bzw. Projekttypen mit inhaltlichen und verknüpften Projektprozessen, auch hin zu den Gates des PEP, kennen die Verantwortlichen nicht und auf Grund des Drucks "Time to Market" beschäftigen sie sich auch nicht damit und sehen dies auch nicht als ihre Aufgabe an, hier Verbesserungen herbeizuführen. Die Gemeinsamkeiten bleiben damit also zu gering, um eine systemische Unterstützung für den Ereignisabgleich mit Aggregierung nach oben und Drill-Down nach unten mit all den für das Managen und die Projektarbeit erforderlichen Funktionen, bis hin zum Managen von Skills auch innerhalb detaillierteren Projektstrukturelementen wie beispielsweise der von Arbeitspaketen, zu ermöglichen.

Im Ergebnis entstehen der Automobilindustrie bei der Entwicklung neuer Fahrzeuge enorme Mehraufwendungen, sie verliert wertvolles Wissen durch Mitarbeiterwechsel und verpasst Chancen ihre gesamten Prozesse besser managen und damit wirtschaftlicher und flexibler agieren zu können.

Es ist bis heute noch kein definiertes Verfahren zur Erzeugung und Nutzung umfangreicher standardisierter Projekt-Referenzmodelle bekannt. Es gibt noch keine Systeme, die Referenzmodelle für Projekte geeignet bereitstellen und beliebige Modifikationen, Vererbungen und Verknüpfungen erlauben und die Inhalte von Projekt-Referenzmodellen in maschinenlesbarer Sprache für Konfigurationszwecke in den Nutzer- bzw. Zielsystemen und damit zur praktischen Anwendung in der Projektarbeit zur Verfügung stellen. Somit gibt es auch noch keine Vorrichtung, die eine Vielzahl von Projekt-Referenzmodellen unterschiedlicher Spezialisierung und Ausprägung als Projektarten bzw. Projekttypen verwaltet und in Portfolios zusammengefasst bereitstellen kann. Es gibt bisher keine Verfahren, welche die manuelle und automatische Erzeugung von Projektkonfigurations-Informationen ermöglichen, um mit diesen Informationen auf dem Markt befindliche und zukünftige Systeme für die Organisation und Durchführung spezifischer Projekte automatisch und unter zur Hilfenahme von Projekt-Referenzmodellen zu konfigurieren.

Genau hier setzt die vorliegende Erfindung an.

Die Erfindung hat das Ziel, ein geeignetes Verfahren zum Erzeugen mindestens eines Projekt-Referenzmodells anzugeben. Des weiteren soll ein Verfahren zur Generierung einer strukturierten Konfigurationsinformation mittels eines solchen Projekt-Referenzmodells vorgeschlagen sowie Vorrichtungen zur Durchführung, Verwaltung und Organisation solcher Verfahren bereitgestellt werden.

Das Verfahren zum Erzeugen mindestens eines Referenzkonfigurationsmodells ist Gegenstand des Anspruchs 1.

Ein Verfahren zum Generieren einer strukturierten Konfigurationsinformation mittels eines solchen Projekt-Referenzmodells ist Gegenstand des Anspruchs 11.

Schließlich ist im Patentanspruch 16 eine Vorrichtung zur Durchführung, Verwaltung und Organisation solcher Verfahren angegeben.

Weiterbildungen der Erfindung sind Gegenstand der Unteransprüche.

Erfindungsgemäß sieht das Verfahren zum Erzeugen mindestens eines Projekt-Referenzmodells, das Prozessanforderungen und deren Steuerung maschinenlesbar definiert, folgende Verfahrensschritte vor:
- Bereitstellen eines vorgegebenen Projekt-Referenzmodells in einer Speicheranordnung mit mindestens einem Klassifikationsschema, das verschiedene Klassifikationselemente enthält;
- Darstellung des vorgegebenen Projekt-Referenzmodells auf einer Anzeigeeinrichtung;
- Generierung eines neuen Projekt-Referenzmodells aus dem vorgegebenen Projekt-Referenzmodell über eine Eingabevorrichtung nach Maßgabe von vorgegebenen, organisationsund/oder leistungsspezifischen Bedingungen;
- Darstellung des neuen Projekt-Referenzmodells auf der Anzeigeeinrichtung;
- Speichern des neuen Projekt-Referenzmodells;
- die Klassifikationselemente werden in einem ersten Speicher mit ihren individuellen Bezeichnungen und Speicherortverweisen auf mindestens einen weiteren Speicher gespeichert;
- in dem mindestens einen weiteren Speicher werden über die Bezeichnungen der Klassifikationselemente hinausgehende Informationen gespeichert;
- zur Generierung des neuen Projekt-Referenzmodells erfolgt ein Zugriff auf den mindestens weiteren Speicher ausschließlich über einen vorausgehenden Zugriff auf den ersten Speicher.

Dabei ist als Projekt-Referenzmodell ein standardisierbarer und wieder verwendbarer Teil einer systemischen Konfigurationsunterstützung von Projektmanagement- und Projektorganisations-Anwendungen, Projektportalen und Projektprozessen gemeint, mit der die Konfigurationsinformation strukturiert und maschinenlesbar bereitgestellt werden kann.

Microsoft Project 2000 - Instructor Edition Complete; Custom-Guide, Inc.; 2002; S. 1 - 43 beschreibt ein Verfahren zur Erstellung und Verwaltung von sog. Project Templates. Solche MS-Project Templates zeichnen sich dadurch aus, dass man freie Spalten definieren und befüllen kann. Die möglichen Information in diesen Spalten sind jedoch nicht weiter strukturierbar. In einem MS-Project Template können keine Sub-Strukturen in anderen MS-Project Templates wieder verwendet werden. Solche Project Templates weisen regelmäßig einen einzigen logischen/physikalischen Speicher, d.h. eine Datei oder Datenbank, auf.

Im Gegensatz hierzu werden gemäss kennzeichnenden Teil des Patentanspruchs 1 mehrere logische und/oder physikalische Speicher eingesetzt, wodurch eine Trennung von Klassifikations-Elementen und Zusatzinformationen für die spätere Generierung von strukturierten Konfigurationsinformationen möglich ist.

Durch diese getrennte Anordnung der Speicher sind alle Modell-Elemente eines Projekt-Referenzmodells (Klassifikationsschema, Klassifikationselemente) in beliebig vielen Projekt-Referenzmodellen nutzbar. Damit kann eine Wiederverwendung von Sub-Strukturen (z. B. wiederkehrende Organisations-Projekt-Strukturen) erreicht werden.

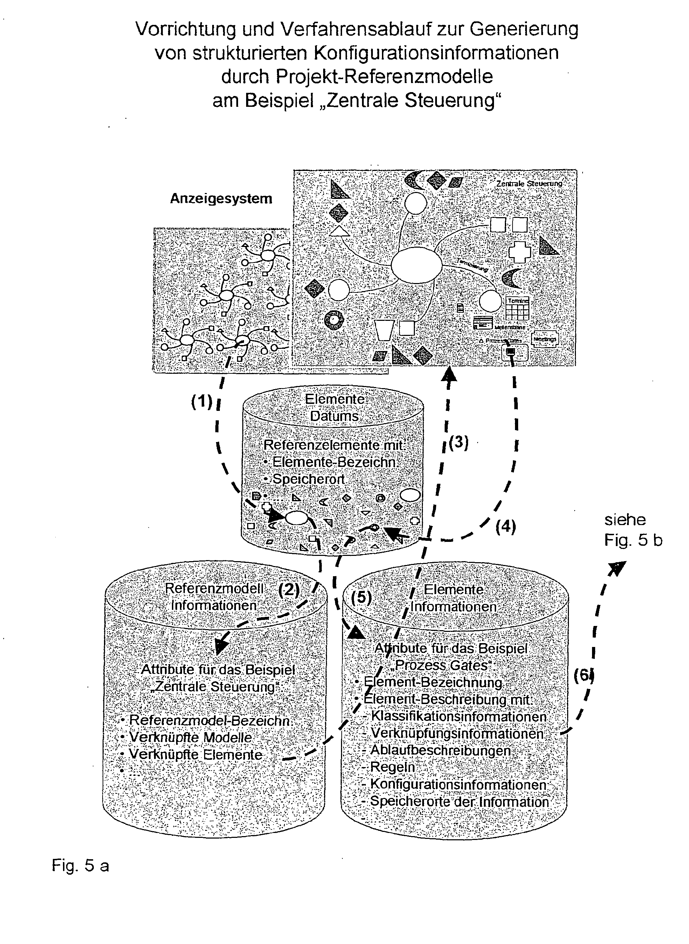

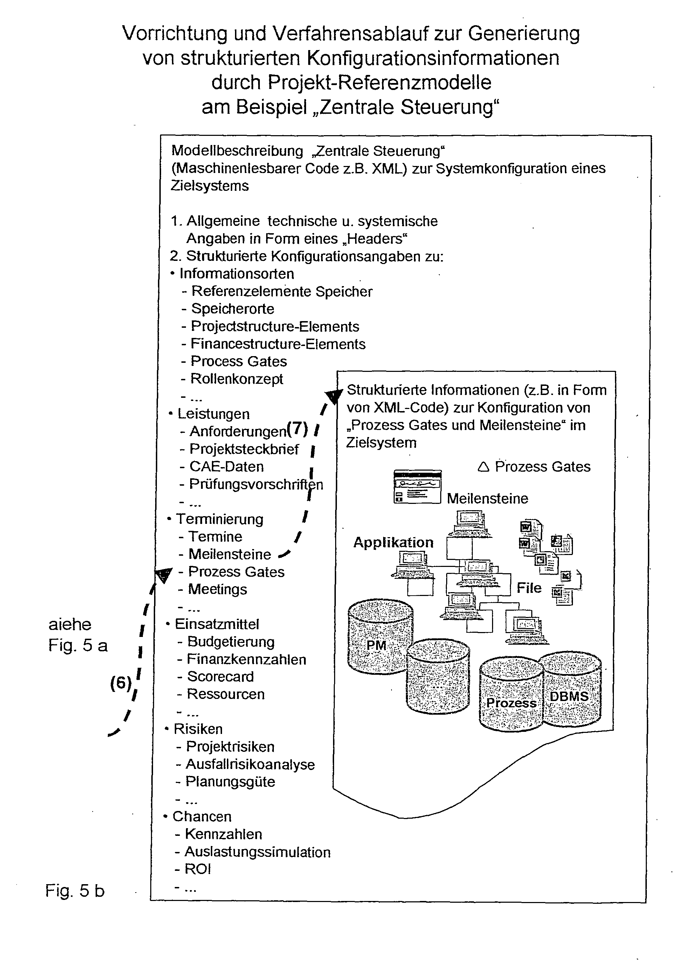

Das Vorsehen mehrerer logischer und/oder physikalischer Speicher ist in den vorliegenden Anmeldeunterlagen im Zusammenhang mit Fig. 5a und Fig. 5b sowie zugehörender Beschreibung ausführlich offenbart worden.

In dem oben genannten Dokument "Microsoft Project 2000" können zwar die MS-Project Templates in ein Klassifikations-Schema auf Grund der Betriebssystem-Funktionalitäten von MS-Windows eingeordnet werden. Es ist damit jedoch lediglich eine hierarchische Ordner-Struktur abbildbar.

Der wesentliche Unterschied zu dem Gegenstand des Patentanspruchs 1 liegt jedoch in der Verwaltung der Klassifikations-Elemente in mehreren Speichern. Nur dadurch ist es möglich, dass die Klassifikations-Elemente in beliebig komplexen Strukturen verwendet werden können, die mittels Klassifikations-Element-Verknüpfungen miteinander in Beziehung gesetzt werden.

Dass sich das in "Microsoft Project 2000" beschriebene Verfahren von dem im neuen Patentanspruch 1 beanspruchten Verfahren grundlegend unterscheidet, zeigt auch folgende Überlegung. Bei einer Speicherung als Projekt-Modell und anschließender Speicherung im Sinne eines als Projekt-Referenzmodell, bei "Microsoft Project 2000" als MS-Project Template, geht bei dem Verfahren gemäss "Microsoft Project 2000" die Beziehung zwischen den Projekt-Referenzmodellen verloren. Insbesondere können Anpassungen, wie Spezialisierungen (z. B. Ergänzen eines abgeleiteten Projekt-Referenzmodells durch zusätzliche Klassifikations-Elemente, Ersetzen eines Klassifikations-Elements durch eine Variante), Aggregation (z. B. Zusammenführen eines Projekts-Referenzmodells "Fahrzeug" mit einem Projekt-Referenzmodell "Software Komponente") damit nicht abgebildet werden, da keine Verknüpfungen mehr vorliegen. Ein MS-Project Template enthält die Projekt Information als Gesamtinformation in einem einzigen Speicher. Damit sind jedoch die in neuen Projekt-Referenzmodellen durchgeführten Änderungen an der Zuordnung von Klassifikations-Elementen nicht nachvollziehbar, während beim Gegenstand des Patentanspruchs 1 hier eine detaillierte Verfolgung der Änderungen möglich ist.

In einer Weiterbildung der Erfindung ist vorgesehen, dass das Projekt-Referenzmodell dadurch erstellt wird, dass Klassifikationselemente einem Klassifikationsschema in einem Computersystem manuell zugeordnet werden, wobei den Klassifikationselementen eine Bezeichnung gegeben und ein Speicherort in einer Speichereinrichtung zugeordnet wird. In dem Speicherort werden dann die für das Klassifikationselement notwendigen Informationen gespeichert.

Nachfolgend wird zum besseren Verständnis der im nachfolgenden verwendete Begriff Projekt-Referenzmodell näher definiert und die Eigenschaften sowie der Zweck solcher Projekt-Referenzmodelle erläutert.

### Kurzdefinition:

Ein Projekt-Referenzmodell ist ein Standardisierungsmodell, welches spezifische Projekt- oder Prozessabwicklungs-, -anwendungs- und -organisationsinformationen in Form von maschinenlesbaren Konfigurationsanweisungen und -daten für die Einstellung und Konfiguration eines oder mehrerer Zielsysteme, in welchen die Projekte bzw. Prozesse geplant, durchgeführt oder nachgehalten werden, ermöglicht. Die Projekt-Referenzmodelle beinhalten Informationen zu Anwendungen, Anwendungsfunktionen, Abläufe, Verfahren, Methoden, Dokumente, Daten, sonstige Organisationshilfen und Schnittstellen.

### Eigenschaften:

Ein Projekt-Referenzmodell umfasst in Klassifikationsschemen organisierte Klassifikationselemente, welche wiederum auf die eigentliche Konfigurationsinformationen für die Anwendungen, Anwendungsfunktionen, Abläufe, Verfahren, Methoden, Dokumente, Daten, sonstige Organisationshilfen und Schnittstellen verweisen (referenzieren). Die Klassifikationselemente und ihre Verweisstrukturen lassen sich beliebig organisieren und unterliegen der Logik des jeweils vom Benutzer definierten Modells. Die Logik des Modells wird durch Klassifizierungs- und Verknüpfungsarten, Ablaufbeschreibungen, Regeln, Daten und sonstigen sinnvollen erweiterbaren Beschreibungen der Elemente erzeugt.

### Aufbau:

Ein Projekt-Referenzmodell ist die Abbildung der logischen Struktur und Abbildung von Klassifikationselementen und ihren Attributen, die Verweise auf Informationen hinsichtlich zu konfigurierender Anwendungen, Anwendungsfunktionen, Abläufe, Verfahren, Methoden, Dokumente, Daten, sonstige Organisationshilfen und Schnittstellen sowie ihrer Information hinsichtlich ihrer Speicherorte an denen diese Informationen tatsächlich abgelegt wurden. Ein Projekt-Referenzmodell bildet den Aufbau und Ablauf von projekt- oder prozessspezifischen Abläufen, Strukturen und Informationen über seine spezifischen Klassifikationselemente und deren Zuordnung als maschinenlesbare Konfigurationsinformation ab.

### Zweck:

Ein Projekt-Referenzmodell dient dazu, die standardisierbaren Teile eines Projektes oder Prozesses und seiner Spezialisierung in Form von Anwendungen, Anwendungsfunktionen, Abläufe, Verfahren, Methoden, Dokumente, Daten, sonstige Organisationshilfen und Schnittstellen in Zielsystemen durch eine automatisierte Konfiguration zur Nutzung verfügbar zu stellen. Die Nutzung von Projekt-Referenzmodellen erfolgt in Zielsystemen wie Projektmanagement-, Projektorganisations- oder Projektportalanwendungen und korrespondierenden Anwendungen. Das Projekt-Referenzmodell übergibt an das oder die Zielsysteme strukturierte maschinenlesbare Projekt-Konfigurations-Informationen.

### Nutzen:

Ein Projekt-Referenzmodell erzeugt in einer maschinenlesbaren Beschreibungs-Sprache (z.B. XML) die erforderlichen Konfigurations-Informationen. Das Zielsystem interpretiert diese Sprache und konfiguriert sich mit den enthaltenen Konfigurations-Informationen automatisch. Voraussetzung ist, dass das Zielsystem die spezifischen Eigenschaften des jeweiligen Projekt-Referenzmodells mit seinen Funktionalitäten unterstützt.

Die Erzeugung von Projekt-Referenzmodellen kann auf unterschiedliche Art und Weist erfolgen. Projekt-Referenzmodelle können mit Editoren direkt codiert oder mit systemischer Unterstützung in Form von dafür erstellten Benutzerinterfaces, also Eingabeeinrichtungen erzeugt werden. Folgende Möglichkeiten bestehen:
1. Individuelle Programmierung in einer maschinenlesbaren Beschreibungssprache (z.B. XML);
2. Erstellung mit systemischer Unterstützung durch eine geeignetes Benutzer-Interface, d. h. geeignete Benutzeroberflächen mit geführten Dialogen. Im Ergebnis liegt eine Konfigurations-Information in einer maschinenlesbaren Beschreibungssprache vor wie unter 1.;
3. Modellierung in einem System mit grafischer Benutzeroberfläche, das dazu geeignet ist, Beschreibungen und Attribute zu liefern, um sie in nachfolgenden Systemen zu vervollständigen (nachfolgendes System wie z.B. in 2. beschrieben).

Bei den Erzeugungsarten 2. und 3. kann sich der Anwender auch durch Wizard-Funktionalitäten (Benutzerführung mit Dialogen und Auswahlmöglichkeiten für Aktionen und Aktivierung der Ausführung bei Bestätigung oder Auswahl durch den Nutzer) führen und unterstützen lassen, sofern das System über eine solche Einrichtung verfügt.

Bevor Projekt-Referenzmodelle erzeugt werden können müssen für eine Organisation gut anwendbare und wiederverwendbare Klassifikationen zur Verwaltung und Organisation der Projekt-Referenzmodelle eingerichtet werden. Hierzu werden Gruppen von Projektreferenzmodellen in Klassifikationen und Klassifikationsschema (Klassifikationslisten, bzw. Klassifikationsstruktur)angelegt und mit ihren Bezeichnungen, Typen, Funktionen und Inhalten beschrieben. Ein weiteres Klassifikationsschema bildet die Zuordnung der Klassifikationselemente innerhalb der Projekt-Referenzmodelle ab. Verweisstrukturen zeigen Abhängigkeiten und Verwendungen der Klassifikationselemente innerhalb des Projekt-Referenzmodells und zu anderen Projekt-Referenzmodellen an. Liegen entsprechende Klassifikationsschemata vor, so lassen sich diese auch an die entsprechenden organisatorischen Anforderungen adaptieren oder erweitern. Dies wird durch die organisationsspezifische Adaption oder Änderung vorhandener Klassifikationen, Klassifikationsschemata (Klassifikationslisten, bzw. Klassifikationsstrukturen) und ihrer Beizeichnungen, Typen, Funktionen und Inhalte erreicht.

Es bestehen erfindungsgemäß verschiedene Möglichkeiten ein erstes und damit quasi Ur-Projekt-Referenzmodell zu erzeugen:
**1. Initialisierung eines Projekt-Referenzmodells**
   Ein Projekt-Referenzmodell wird entwickelt, ohne auf bereits bestehende Modelle zurückzugreifen. Die Klassifikationselemente werden Klassifikationsschemen zugeordnet. Die Elementinformationen (Attribute), bestehend aus der Element-Bezeichnung und dem Element-Speicherort, werden manuell erstellt. Ihre Verweise auf den oder die Speicherorte, an welchen eigene und weitere Informationen hinsichtlich Klassifikationen, Verknüpfungen, Abläufen, Regeln, Konfigurations-Informationen, Daten und weitere Beschreibungen für das zu konfigurierende Zielsystem enthalten sind, werden mit den erforderlichen Informationen und Daten manuell vervollständigt.
**2. Extraktion eines Projekt-Referenzmodells aus einem Best Practice Projekt**
   Aus einem bearbeiteten und bewährten Projekt oder Prozess (Best Practice) innerhalb eines oder mehrerer Zielsysteme werden die standardisierbaren Strukturinformationen für ein Projekt-Referenzmodell extrahiert. Dazu werden die unter 1. beschriebenen Informationen herausgefiltert und in maschinenlesbarem Code zur Weiterverarbeitung bereitgestellt oder mit entsprechender User-Interface- oder Wizard-Unterstützung überarbeitet und modifiziert.
3. **Detaillierung** eines **Projekt-Referenzmodells**
   Ein bestehendes Projekt-Referenzmodell wird detailliert, erhält tiefergehende Spezialisierung. Dazu werden neue Elemente mit Verweisen auf die Informationen angelegt oder die Beziehungen der Elemente untereinander definiert. Hier kann bei systemischer Unterstützung ebenfalls ein Wizard zum Einsatz kommen.
**4. Duplizierung eines Projekt-Referenzmodells**
   Ein bestehendes Projekt-Referenzmodell kann dupliziert werden, um es beispielsweise in einem anderen System zu nutzen oder an anderer Stelle zu verwalten.
**5. Vererbung der Eigenschaften eines Projekt-Referenzmodells**
   Ein bestehendes Projekt-Referenzmodell gibt Eigenschaften in Form von Klassifikationen und Klassifikationselementen an ein aus ihm erzeugtes Modell weiter. Dabei können einzelne Klassifikationen und Klassifikationselemente oder die Gesamtheit weitergegeben werden. Die Auswahl der zu vererbenden Klassifikationen und Klassifikationselemente wird bei Vorliegen der systemischen Voraussetzungen durch ein geeignetes User-Interface oder einen Wizard unterstützt.
**6. Versionierung und Änderung eines Projekt- Referenzmodells**
   Ein bestehendes Projekt-Referenzmodell wird geändert. Es können neue Klassifikationen und Klassifikationselemente hinzugefügt oder bestehende entfernt werden. Es entsteht eine neue Version des Projekt-Referenzmodells. Bei der Versionierung bleibt das Ausgangsmodell weiter existent. Auf ältere Versionen kann über ein Berechtigungskonzept zugegriffen werden.

Neben dem erfindungsgemäßen Verfahren zum Erzeugen eines Projekt-Referenzmodells liegt es auch im Rahmen der vorliegenden Erfindung ein Verfahren zur Generierung einer strukturierten Konfigurationsinformation mittels eines nach dem erläuterten Verfahren erzeugten Projekt-Referenzmodells bereitzustellen, wobei das Verfahren zur Generierung der genannten strukturierten Konfigurationsinformation folgende Verfahrensschritte aufweist:

### 1. - Auswahl eines auf einer Anzeigeeinrichtung angezeigten Projekt-Referenzmodells per Eingabeeinrichtung;

- selbsttätiges Auslösen eines Verweises auf einen ersten Speicher, in dem Bezeichnungen von allen Klassifikationselementen und deren Speicherort für weitere Informationen gespeichert sind;
- selbsttätiges Auslösen eines Verweises auf einen zweiten Speicher, in dem die Informationen für das ausgewählte Projekt-Referenzmodell und Verweise auf verknüpfte Projekt-Referenzmodelle und/oder verknüpfte Klassifikationselemente gespeichert sind;
- Anzeige sämtlicher Klassifikationselemente und Klassifikationsschemata des ausgewählten Projekt-Referenzmodells auf der Anzeigeeinrichtung;
- Auswählen der zu bearbeitenden Klassifikationselemente nach Maßgabe von per Eingabeeinrichtung eingegebenen Befehlen;
- Anzeige des ausgewählten Klassifikationselementes und erneutes, selbsttätiges Verweisen auf den ersten Speicher;
- Ermitteln des in dem ersten Speicher für dieses ausgewählte Klassifikationselement gespeicherten Speicherortes;

Schließlich ist die Vorrichtung zur Durchführung der erfindungsgemäßen Verfahren durch folgende Merkmale gekennzeichnet:
- eine Anzeigeeinrichtung;
- eine Steuereinrichtung;
- einen ersten Speicher, in welchem alle Klassifikationselemente mit ihren individuellen Bezeichnungen, weiteren Informationen und zugeordneten Speicherorten, in welchem Informationen zu diesen Klassifikationselementen gespeichert sind, abgelegt sind;
- einem zweiten Speicher, der die Speicherorte aufweist, in denen die Informationen für Klassifikationselemente gespeichert sind, welche Projekt-Referenzmodelle kennzeichnen;
- mindestens einem dritten Speicher, in denen die Informationen für alle übrigen Klassifikationselemente gespeichert sind,
- wobei die Steuereinrichtung den Zugriff auf die mindestens drei Speicher so steuert, dass stets immer nur über einen bereits erfolgten Zugriff auf den ersten Speicher auf den zweiten oder dritten Speicher zugreifbar ist.

Das erfindungsgemäße Verfahren und dessen Vorrichtung wird nachfolgend anhand von schematischen Figuren näher erläutert.

Es zeigen:
- Figur 1: den prinzipiellen Aufbau eines Projekt-Referenzmodells,
- Figur 2: am Beispiel "Fahrzeugentwicklung" den Auszug aus einer Projekt-Referenzmodell-Organisation,
- Figur 3: eine mögliche Informationsstruktur eines einzelnen Klassifikationselements innerhalb eines Projekt-Referenzmodells,
- Figur 4: beispielhaft Details einer Informationsstruktur eines Projekt-Referenzmodells "zentrale Steuerung" und
- Figur 5: die prinzipielle Struktur einer Vorrichtung samt schematischer Darstellung des zugehörenden Verfahrensablaufes zur Generierung von strukturierten Konfigurationsinformationen durch Projekt-Referenzmodelle am Beispiel "zentrale Steuerung".

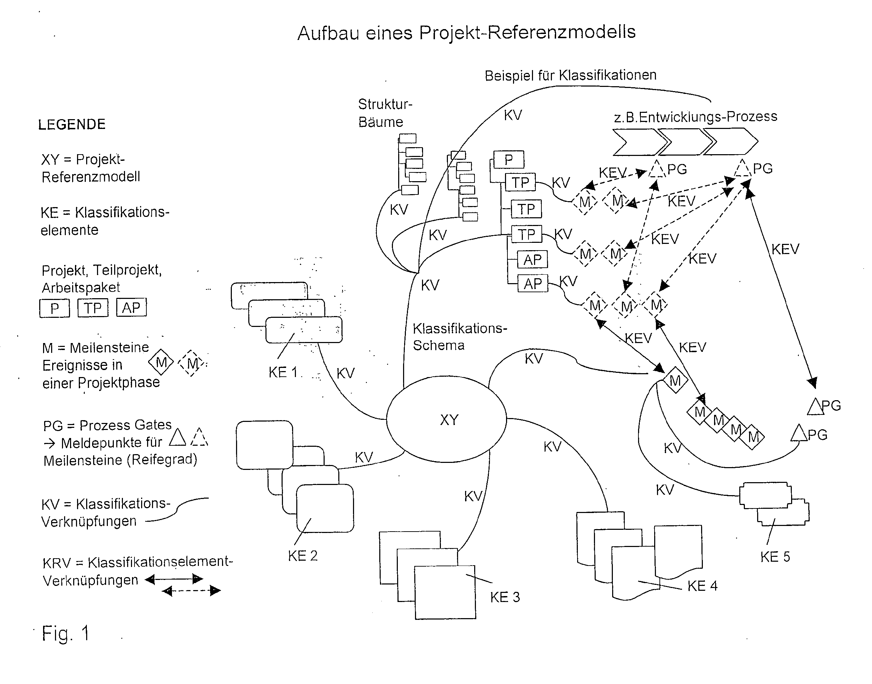

In Figur 1 ist beispielhaft der Aufbau eines Projekt-Referenzmodells gezeigt. Das Projekt-Referenzmodell trägt hier den Namen XY und beinhaltet ein über Verbindungslinien, sogenannte Klassifikations-Verknüpfungen KV, Pfeilen, sogenannte Klassifikationselement-Verknüpfungen KEV gebildetes Klassifikationsschema. In dem dargestellten Klassifikationsschema sind Klassifikationselemente KE klassifiziert. Diese Klassifikationselemente KE können geordnet sein durch Klassifikation, können Verknüpfungen zu anderen Klassifikationselementen und deren Informationen haben oder auf unterschiedliche Speicher zeigen. Im dargestellten Klassifikationsschema sind eine Vielzahl von Klassifikationselementen KE1 ... KE5 zeichnerisch dargestellt.

Das Klassifikationsschema weist z. B. Strukturbäume auf, verfügt über Informationen zu verschiednen Projekten P, Teilprojekten TP und Arbeitspaketen AP, welche über Meilensteine M oder Ereignisse einer Projektphase gekennzeichnet sind. Schließlich verfügt das gesamte Klassifikationsschema über verschieden sogenannte Prozessgates PG, d. h. Meldepunkte für bestimmte Meilensteine, die zu erreichen sind.

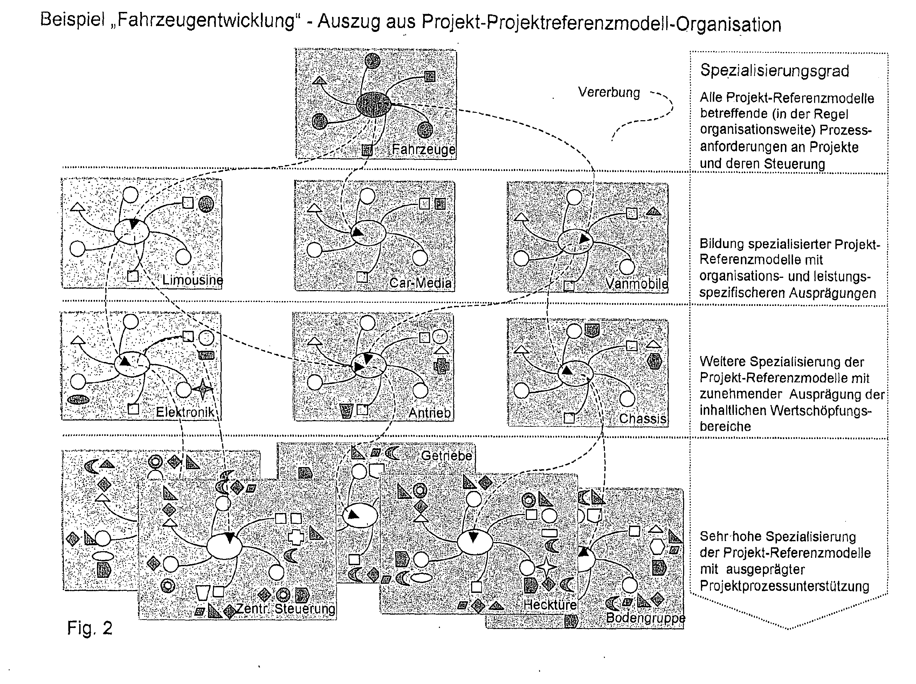

Das gewählte Beispiel von Figur 2 zeigt beispielhaft den Auszug aus der Organisation von Projekt-Referenzmodellen, wie sie bei einem Fahrzeughersteller zum Einsatz kommen könnten. Das Beispiel zeigt einen hierarchischen Ausschnitt, um das Verständnis zu fördern. Tatsächlich lassen sich durch die Verweis-Möglichkeiten innerhalb der Klassifikationsschemata mehrdimensionale Netz-Strukturen erzeugen. Durch Vererbung können Klassifikationselemente weitergegeben und durch Erweiterung oder Spezialisierung neue Projekt-Referenzmodelle entstehen. Typischerweise werden die vererbten Klassifikationselemente zumindest teilweise oder ganz auf ihre nachfolgenden ("Kinder") Projekt-Referenzelemente übertragen.

Das Beispiel von Figur 2 zeigt die Entwicklung von Fahrzeugen in einem Unternehmen. Das Referenzmodell "Fahrzeuge" enthält alle relevanten und allgemeinen projektspezifischen Entwicklungs-Informationen, welche an die Referenzmodelle "Limousine", "Car-Media" und "Vanmobile" erben und individuell um ihre eigenen Spezifika erweitert werden. Die Spezialisierungen könnten so beispielsweise inhaltliche Wertschöpfungsbereiche (Produkte) oder die Projekt-Prozesse (Abläufe) betreffen und die Ergänzung mit den entsprechenden Elementen erfordern. Beliebige rollenspezifische Sichten lassen sich in Form von Portfolios erstellen.

Wie aus der Figur 2 erkennbar, nimmt der Spezialisierungsgrad hierarchisch von oben nach unten stark zu. Das Projekt-Referenzmodell für "Fahrzeuge" ist das allgemeinste und in der Regel das organisationsweiteste, welches solche Anforderungen enthält, die bei allen Projekten und Prozessen und deren Steuerung in der Organisation gemeinsam sind.

Das Klassifikationsschema und die Klassifikationselemente dieses allgemeinen Projekt-Referenzmodells "Fahrzeuge" werden auf die Projektmodelle "Limousine", "Car-Media" und "Vanmobile" übertragen bzw. vererbt. Die Spezialisierung dieser Referenzmodelle ergibt sich durch Hinzufügen von spezifischen Klassifikationen und Klassifikationselementen, die für diese Referenzmodelle notwendig sind. Diese neu hinzugekommenen Klassifikationen und Klassifikationselemente sind in der zweiten Ebene von oben grau hinterlegt dargestellt.

Eine weitere Spezialisierung der Referenzmodelle ergibt sich in der von oben nach unten gesehenen dritten Ebene gemäß Figur 2. Dort sind die Referenzmodelle "Elektronik", "Antrieb" und "Chassis." dargestellt. Die neu hinzugekommenen Klassifikationselemente sind graphisch wieder grau hinterlegt.

Schließlich befindet sich in der von oben gesehen untersten, vierten Ebene weitere Referenzmodelle für "zentrale Steuerung", "Getriebe", "Hecktüre" und "Bodengruppe". Diese unterste Ebene der Referenzmodelle zeichnet sich durch eine sehr hohe Spezialisierung mit ausgeprägter Projektprozessunterstützung aus. Die hinzugekommenen, neuen Klassifikationen und Klassifikationselemente sind erneut grau hinterlegt. Wie aus Figur 2 ersichtlich, vererben sich von einer Ebene von oben nach unten die Klassifikationsschemata.

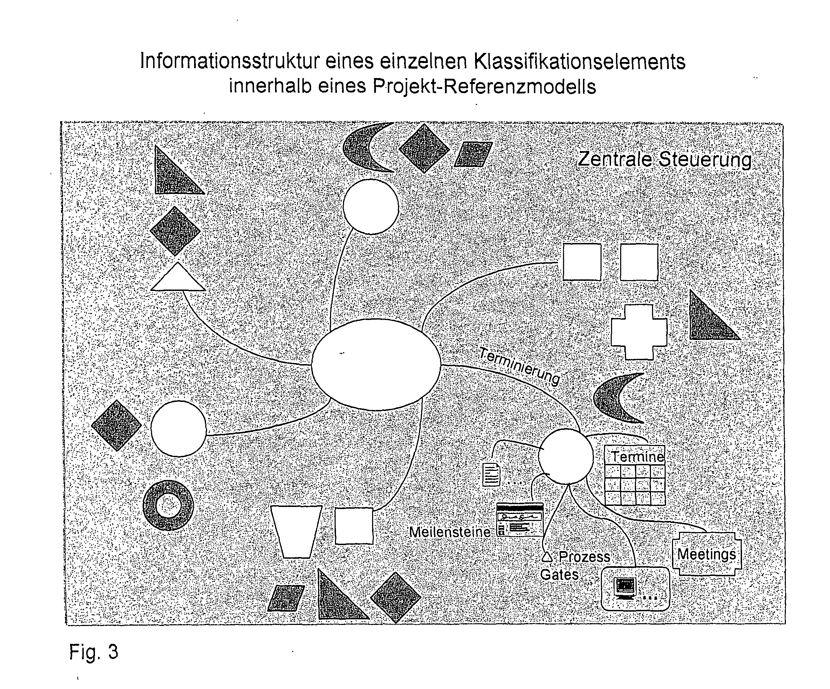

In Figur 3 ist beispielhaft die Informationsstruktur bzw. das Klassifikationsschema eines einzelnen Klassifikationselementes innerhalb eines Projekt-Referenzmodells dargestellt. Im Beispiel sind sogenannte Prozessgates PG innerhalb der Informationsstruktur vorhanden. Solche Prozessgates PG werden bei der Fahrzeugentwicklung als übergeordnete Fertigungsmeldungspunkte genutzt, um die Fortschritte des Herstellprozesses von Fahrzeugen überwachen zu können. Da ein Fahrzeugentwicklungsprozess aus einer Vielzahl von Teilprozessen und Teilprojekten mit weiterer Granularität besteht, werden Projektmeilensteine teilweise auch als Ergebnismeldepunkte den Prozessgates PG zugeordnet.

Wird beispielsweise ein Klassifikationselement "zentrale Steuerung-Prozessgate" genannt, so verweist erfindungsgemäß dieses Klassifikationselement auf einen Speicherort, der z. B. folgende Elementeinformationen enthalten kann:
- Klassifikationsinformation dieses Elements,
- Verknüpfungsinformationen zwischen dem Prozess "zentrale Steuerung" und der Meilensteinplanung,
- Ablaufbeschreibungen hinsichtlich der Meldeereignisse, Meilensteine und Prozessgates,
- Regeln für die unterschiedlichen Meldeereignisse am jeweiligen Prozessgate und Meilenstein, und
- systemische Konfigurationsinformationen und Daten für ein Zielsystem, in dem das Projekt zur Durchführung konfiguriert wird.

Das Beispiel von Figur 3 zeigt also ein Referenzmodell, wie es für die Organisation des Projekts "Zentrale Steuerung" (elektronische zentrale Steuereinheit) als Bestandteil der Elektronik für eine Limousine bei einem Fahrzeughersteller eingesetzt werden könnte. Die Informations-Struktur des vorliegenden Referenzmodells weist daher allgemeinere Teile der Projektprozesse und gewisse Grade der Spezialisierung aus, erkennbar an allgemeineren und spezialisierteren Klassifikationselementen. Das Projekt-Referenzmodell umfasst in Klassifikationsschemen organisierte Klassifikationselemente, welche wiederum auf die eigentliche Konfigurationsinformationen für die Anwendungen, Anwendungsfunktionen, Abläufe, Verfahren, Methoden, Dokumente, Daten, sonstige Organisationshilfen und Schnittstellen verweisen (referenzieren).

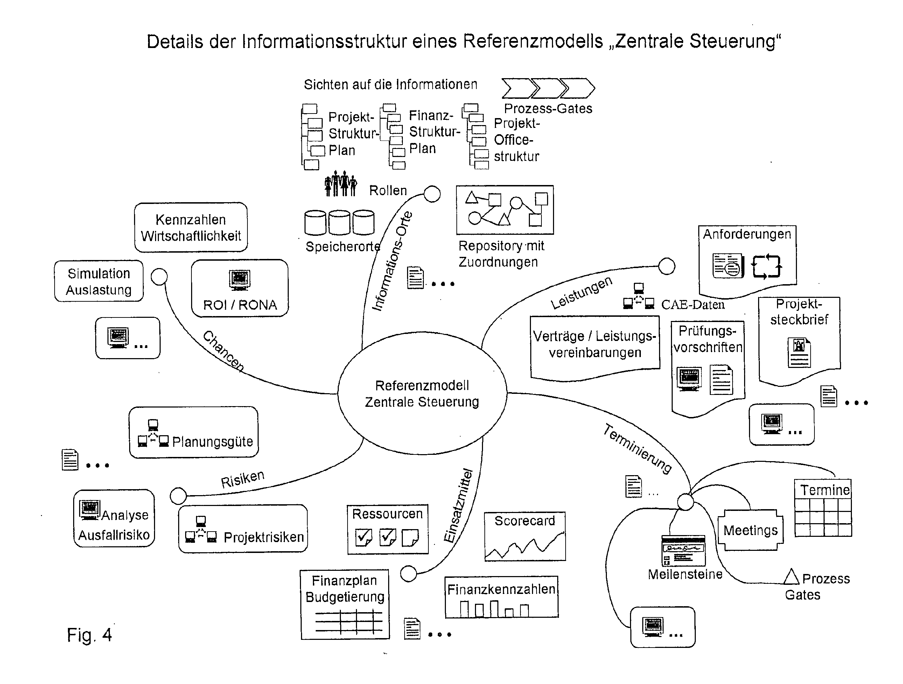

In Figur 4 sind die Details der Informationsstruktur eines Projekt-Referenzmodells "zentrale Steuerung" beispielhaft dargestellt.

Das in Figur 4 dargestellte Referenzklassifikationsmodell "Zentrale Steuerung" verfügt über ein Klassifikationsschema, in dem Informationen zu Risiken, Chancen, Informationsorten, Leistungen, Determinierung und der Einsatzmittel vorgesehen sind. Als Risiken sind beispielsweise eine Analyse zu Ausfallrisiken sowie Projektrisiken und Informationen zur Planungsgüte als Klassifikationselemente abgelegt. Die Klassifikationselemente "Simulation, Auslastung", "Kennzahlen, Wirtschaftlichkeit" und "ROI-RONA" sind der Klassifizierung "Chancen" zugeordnet. Wie aus Figur 4 weiter ersichtlich sind zu den Informationsorten u. a. ein Projektstrukturplan, ein Finanzstrukturplan, eine Projektoffice-Struktur und Speicherorte als Klassifikationselemente abgespeichert, ebenso sogenannte Prozessgates. Hinsichtlich der Klassifizierungen "Leistungen", "Terminierung" und "Einsatzmittel" wird auf die Beschriftung von Figur 4 ausdrücklich verwiesen.

In den Figuren 1 bis 4 wurden die verschiedenen Klassifikationselemente erläutert. Diese Klassifikationselemente können vererbt werden, neu generiert werden, geändert werden usw. Um die möglichen Zustandformen dieser Klassifikationselemente in einem Referenzklassifikationsmodell kennzeichnen zu können, ist es vorgesehen, dass den Klassifikationselementen Zustandscodes zugeordnet werden. Diese Zustandscodes sollen die folgenden verschiedenen Zustände der Klassifikationselemente kennzeichnen können.
1. Existent - das Klassifikationselement existiert, es besteht eine Verknüpfung zu einer Information
2. Virtuell gelöscht - das Klassifikationselement existiert, es enthält keine Verknüpfung
3. Physisch gelöscht - das Klassifikationselement ist nicht mehr existent
4. Geändert - das Klassifikationselement ist geändert, und enthält die geänderte Information
5. Versioniert - das Klassifikationselement ist geändert und existiert als Version
6. Vererbt - die Eigenschaften des Klassifikationselements wird auf ein neues Element (Kind) übertragen
7. Dupliziert - von dem Element existiert eine physische Kopie.

Insgesamt ist festzustellen, dass die Klassifikationselemente eines Projekt-Referenzmodells durch Klassifikationsschemen zu ordnen sind. Welche Elemente in einem Klassifikationsschema wie angeordnet sind, hängt von einer Vielzahl von Faktoren ab. Zu den wichtigsten Kriterien für den Aufbau eines Klassifikationsschemas gehören Ausprägungen bzw. Merkmale:
- Vorliegendes Unternehmens- oder Bereichsmodell (Organisationsform, Branche)
- Generelle Vorgaben, Normen und Verfahren in Projekten
- Projekttypen (Forschungs-, Entwicklungs-, Fertigungs-, ...-, Marketingprojekt )
- Rollen- und Funktionsstrukturen (Finanzierungsstruktur, Logistiksteuerung, Controlling, usf.)
- Anforderungen an das Berichtswesen und Reporting
- ...

In Figur 5 sind die Vorrichtung und der Verfahrensablauf zur Generierung von strukturierten Konfigurations-Informationen durch Projekt-Referenzmodelle am Beispiel "Zentrale Steuerung" erläutert.

Das gewählte Beispiel zeigt den Auszug aus der Organisation von Projekt-Referenzmodellen, wie sie bei einem Fahrzeughersteller zum Einsatz kommen könnten. Ausgewählt wird das Projekt "Zentrale Steuerung".

Beschreibung der Vorrichtung und des Verfahrensablaufs:
(1) Das Projekt-Referenzmodell "Zentrale Steuerung" wird aus einem "Anzeigesystem" ausgewählt. Es verweist auf einen Speicher "Elemente Datums", welcher die Bezeichnungen der Elemente und ihren Speicherort für weitere Informationen kennt.
(2) Der Speicherort verweist an den Speicher "Referenzmodell Informationen". Dieser enthält alle Elemente die zu diesem Projekt-Referenzmodell "Zentrale Steuerung" gehören.
(3) Das Anzeigesystem bringt alle Elemente des Projekt-Referenzmodells "Zentrale Steuerung" zur Ansicht und Bearbeitungsauswahl.
(4) Die über das Anzeigesystem ausgewählten Elemente "Process Gates" und "Meilensteine" verweisen über ihren Speicher "Elemente Datums" an den Speicherort der "Elemente Informationen".
(5) Die dort vorliegenden Attribute für das Beispiel "Process Gates" den Elementbeschreibungen Klassifikations-Informationen, Verknüpfungs-Information zu anderen Modellen oder Elementen und Ablaufbeschreibungen, Regeln, Konfigurationsinformationen, Speicherorte zusätzlicher Informationen und weiteren beschreibenden Merkmalen oder Ausprägungen werden für die Konfigurationsbeschreibung ermittelt.
(6) Strukturierte Informationen in Form von maschinenlesbarem Code (z.B. XML) wird für die Elemente "Process Gates" und "Meilensteine" erzeugt und entsprechend der Klassifikationsstruktur eingeordnet.
(7) Die vorliegende strukturierte Information zur Konfiguration von Zielsystemen liegt nun geeignet vor. Das Zielsystem kann sich damit automatisch konfigurieren und die Information des Projekt-Referenzmodells sowie hier der Elemente "Prozess Gates" und "Meilensteine" sowie ihre Abhängigkeit übernehmen und seine beschriebenen Konfiguration automatisch durchführen. Das Zielsystem hält die Konfigurationsinformationen für die Anwender so bereit, dass diese jederzeit ein Projekt "Zentrale Steuerung" aufsetzen, es individuell an ihre Anforderungen anpassen und nutzen können.

### Bezugszeichenliste

- AP =: Arbeitspaket
- KE 1-5 =: Klassifikationselemente 1 bis 5
- KEV =: Klassifikationselement-Verknüpfung
- KV =: Klassifikations-Verknüpfungen
- M =: Meilensteine
- P =: Projekt
- PG =: Prozess Gates (Meldepunkte)
- TP =: Teilprojekt

## Patentansprüche

1. Verfahren zum Erzeugen mindestens eines Projekt-Referenzmodells, welches Projekt- und Prozessanforderungen und deren Steuerung maschinenlesbar definiert mit folgenden Verfahrensschritten:
- Bereitstellen eines vorgegebenen Projekt-Referenzmodells in einer Speicheranordnung mit mindestens einem Klassifikationsschema, das verschiedene Klassifikationselemente enthält;
- Darstellung des vorgegebenen Projekt-Referenzmodells auf einer Anzeigeeinrichtung;
- Generierung eines neuen Projekt-Referenzmodells aus dem vorgegebenen Projekt-Referenzmodell über eine Eingabevorrichtung nach Maßgabe von vorgegebenen organisationsund/oder leistungsspezifischen Bedingungen;
- Darstellung des neuen Projekt-Referenzmodells auf der Anzeigeeinrichtung; und
- Speichern des neuen Referenzkonfigurationsmodells,
**gekennzeichnet durch** folgende Verfahrensschritte:
- Die Klassifikationselemente werden in einem ersten Speicher mit ihren individuellen Bezeichnungen und Speicherortverweisen auf mindestens einen weiteren Speicher gespeichert;
- In dem mindestens einen weiteren Speicher werden über die Bezeichnungen der Klassifikationselemente hinausgehende Informationen gespeichert;
- Zur Generierung des neuen Projekt-Referenzmodells erfolgt ein Zugriff auf den mindestens weiteren Speicher ausschließlich über einen vorausgehenden Zugriff auf den ersten Speicher.

2. Verfahren nach Anspruch 1,
**dadurch gekennzeichnet, dass** das vorgegebene Projekt-Referenzmodell erstellt wird, indem Klassifikationselemente einem Klassifikationsschema in einem Computersystem zugeordnet werden, wobei den Klassifikationselementen eine Bezeichnung gegeben und ein Speicherort in einer Speichereinrichtung zugeordnet wird und wobei in dem Speicherort Informationen zu diesen Klassifikationselementen gespeichert werden.

3. Verfahren nach Anspruch 2,
**dadurch gekennzeichnet, dass** die Informationen Klassifikationen, Verknüpfungen, Abläufe, Regeln und Konfigurations-Informationen, Daten sowie weitere Beschreibungen für ein zu konfigurierendes Zielsystem enthalten.

4. Verfahren nach Anspruch 1,
**dadurch gekennzeichnet, dass** das vorgegebene Projekt-Referenzmodell aus einem bereits bearbeiteten und bewährten Projekt oder Prozess (Best Practice) gewonnen wird.

5. Verfahren nach einem der Ansprüche 1 bis 4,
**dadurch gekennzeichnet, dass** in dem Speicherort, auf den ein Klassifikationselement verweist, neben der Information für dieses Klassifikationselement auch dessen Verknüpfung auf andere Klassifikationselemente gespeichert sind;

6. Verfahren nach einem der Ansprüche 1 bis 5,
**dadurch gekennzeichnet, dass** das Generieren des vorgegebenen Projekt-Referenzmodells durch Detaillierung erfolgt, indem dem vorgegebenen Projekt-Referenzmodell über ein User-Interface mindestens ein neues Klassifikationselement und/oder mindestens ein neues Klassifikationsschema zugeordnet werden.

7. Verfahren nach einem der Ansprüche 1 bis 5,
**dadurch gekennzeichnet, dass** das Generieren des neuen Projekt-Referenzmodells durch Duplizierung des vorgegebenen Projekt-Referenzmodells mittels User-Interface erfolgt.

8. Verfahren nach einem der Ansprüche 1 bis 6,
**dadurch gekennzeichnet, dass** das Generieren des neuen Projekt-Referenzmodells durch Vererbung von Eigenschaften des vorgegebenen Projekt-Referenzmodells erfolgt, indem Klassifikationsschemata und/oder Klassifikationselemente des vorgegebenen Projekt-Referenzmodells an das neue Projekt-Referenzmodell weitergegeben werden, und wobei ein User-Interface die Auswahl der weiterzugebenden Klassifikationsschemata und/oder Klassifikationselemente steuert.

9. Verfahren nach einem der Ansprüche 1 bis 8,
**dadurch gekennzeichnet, dass** den Klassifikationselementen Zustands-Codes zugeordnet sind.

10. Verfahren nach Anspruch 9,
**dadurch gekennzeichnet, dass** die Zustands-Codes darauf hinweisen, ob das entsprechende Klassifikationselement im Projekt-Referenzmodell existent ist oder virtuell gelöscht, geändert, versioniert, vererbt, gesperrt oder dupliziert wurde.

11. Verfahren zur Generierung einer strukturierten Konfigurationsinformation mittels eines erzeugten Projekt-Referenzmodells nach einem der Ansprüche 1 bis 10, wobei folgende Verfahrensschritte vorgesehen sind:
- Auswahl eines auf einer Anzeigeeinrichtung angezeigten Projekt-Referenzmodells per Eingabeeinrichtung;
- selbsttätiges Auslösen eines Verweises auf einen ersten Speicher, in dem Bezeichnungen von allen Klassifikationselementen und deren Speicherort für weitere Informationen gespeichert sind;
- selbsttätiges Auslösen eines Verweises auf einen zweiten Speicher, in dem die Informationen für das ausgewählte Projekt-Referenzmodell und Verweise auf verknüpfte Projekt-Referenzmodelle und/oder verknüpfte Klassifikationselemente gespeichert sind;
- Anzeige sämtlicher Klassifikationselemente und Klassifikationsschemata des ausgewählten Projekt-Referenzmodells auf der Anzeigeeinrichtung;
- Auswählen der zu bearbeitenden Klassifikationselemente nach Maßgabe von per Eingabeeinrichtung eingegebenen Befehlen;
- Anzeige des ausgewählten Klassifikationselementes und erneutes, selbsttätiges Verweisen auf den ersten Speicher;
- Ermitteln des in dem ersten Speicher für dieses ausgewählte Klassifikationselement gespeicherten Speicherortes;
- Selbsttätiges Verweisen auf diesen Speicherort und Abrufen der in diesem Speicherort gespeicherten Informationen;
- Umsetzen der dort abgerufenen Informationen in maschinenlesbare Codes und Einordnen in eine Klassifikationsstruktur.

12. Verfahren nach Anspruch 11,
**dadurch gekennzeichnet, dass** bei Vorliegen von weiteren Verweisen in den abgerufenen Informationen erneut auf den ersten Speicher verwiesen wird, um dort die in weiteren Speicherorten abgelegten weiteren Informationen abzurufen.

13. Verfahren nach Anspruch 12,
**dadurch gekennzeichnet, dass** das Umsetzen der abgerufenen Informationen in maschinenlesbare Codes erst dann erfolgt, wenn in den abgerufenen Informationen keine Verweise mehr enthalten sind.

14. Verfahren nach Anspruch 11, 12 oder 13
**dadurch gekennzeichnet, dass** nach dem Umsetzen in maschinenlesbare Codes ein selbsttätiges Konfigurieren des Zielsystems oder der Zielsysteme durch Übernahme der Informationen des Prozess-Projekt-Referenzmodells und der ausgewählten Klassifikationselemente erfolgt.

15. Verwendung des Verfahrens nach einem der Ansprüche 1 bis 14 in der Planung von Projekten, Projektprozessen und projekthaften Entwicklungs-, Produktions- und Serviceprozessen, insbesondere in der Großindustrie und in Automobil-, Kommunikations-, Informationstechnologie- und Finanzdienstleistungskonzernen.

16. Vorrichtung zur Durchführung eines Verfahrens nach einem der Ansprüche 1 bis 15 mit folgenden Merkmalen:
- eine Anzeigeeinrichtung;
- eine Steuereinrichtung;
- einen ersten Speicher, in welchem alle Klassifikationselemente mit ihren individuellen Bezeichnungen, weiteren Informationen und zugeordneten Speicherorten, in welchem Informationen zu diesen Klassifikationselementen gespeichert sind, abgelegt sind;
- einem zweiten Speicher, der die Speicherorte aufweist, in denen die Informationen für Klassifikationselemente gespeichert sind, welche Prozess-Projekt-Referenzmodelle kennzeichnen;
- mindestens einem dritten Speicher, in dem Informationen für alle übrigen Klassifikationselemente gespeichert sind,
- wobei die Steuereinrichtung den Zugriff auf die mindestens drei Speicher so steuert, dass stets immer nur über einen bereits erfolgten Zugriff auf den ersten Speicher auf den zweiten oder dritten Speicher zugreifbar ist.

17. Vorrichtung nach Anspruch 16,
**dadurch gekennzeichnet, dass** in den Speicherorten Informationen für alle übrigen Klassifikationselemente gespeichert sind.

18. Vorrichtung nach Anspruch 16 oder 17,
**dadurch gekennzeichnet, dass** in dem dritten Speicher Informationen für Klassifikationselemente oder Verweise enthalten sind.

19. Vorrichtung nach Anspruch 16,
**dadurch gekennzeichnet, dass** die Steuereinrichtung mindestens eine Eingabevorrichtung aufweist, über welche an der Anzeigeeinrichtung darstellbare Projekt-Referenzmodelle oder Klassifikationselemente auswählbar sind.

20. Vorrichtung nach Anspruch 17,
**dadurch gekennzeichnet, dass** die Eingabevorrichtung sprachgesteuert ist.
